# FASCICULE DE BREVET EUROPEEN

(11) **EP 2 231 728 B1**
(45) Date de publication et mention de la délivrance du brevet: **14.12.2011**
(21) Numéro de dépôt: 08872979.3
(22) Date de dépôt: 23.12.2008
(51) Int. Cl.: C10L 1/197, C10L 10/08, C10L 10/14, C08F 210/02, C08F 210/06, C08F 218/04, C08F 8/14, C08F 8/12, C08F 216/06, C08F 218/10, C10M 145/12

(54) **UTILISATION DE COPOLYMÈRES D'ÉTHYLÈNE ET/OU DE PROPYLÈNE ET D'ESTERS VINYLIQUES MODIFIÉS PAR GREFFAGE COMME ADDITIFS BIFONCTIONNELS DE LUBRIFIANCE ET DE TENUE À FROID POUR HYDROCARBURES LIQUIDES**
VERWENDUNG VON PFROPFMODIFIZIERTEN COPOLYMEREN AUS ETHYLEN UND/ODER PROPYLEN UND VINYLESTERN ALS BIFUNKTIONELLE SCHMIERFÄHIGE UND KÄLTEBESTÄNDIGE ZUSÄTZE FÜR FLÜSSIGE KOHLENWASSERSTOFFE
USE OF GRAFT-MODIFIED COPOLYMERS OF ETHYLENE AND/OR PROPYLENE AND VINYL ESTERS AS BIFUNCTIONAL LUBRICITY AND COLD-RESISTANCE ADDITIVES FOR LIQUID HYDROCARBONS

(30) Priorité: 26.12.2007 FR 0709093
(43) Date de publication de la demande: 29.09.2010
(73) Titulaire: Total Raffinage Marketing, 92800 Puteaux (FR)
(72) Inventeur: DOLMAZON, Nelly, F-69360 Serezin du Rhone (FR); PAPIN, Géraldine, F-33650 Martillac (FR); TORT, Frédéric, F-69530 Brignais (FR); HEROGUEZ, Valérie, F-33700 Mérignac (FR)
(74) Mandataire: Hirsch & Associés
(86) Numéro de dépôt international: PCT/FR2008/001816
(87) Numéro de publication internationale: WO 2009/106743

(56) Documents cités:
- EP-A- 0 448 786
- EP-A- 0 493 769
- EP-A- 1 116 780
- WO-A-94/00536
- FR-A- 2 099 117
- US-A- 3 236 612
- US-A1- 2004 226 216

## Description

### DOMAINE TECHNIQUE

La présente invention concerne l'utilisation de copolymères à base d'éthylène et/ou de propylène et d'ester(s) vinylique(s) modifiés par greffage, efficaces pour améliorer à la fois la tenue à froid et la lubrifiance des hydrocarbures liquides en particulier les distillats moyens issus de la distillation du pétrole et les pétroles bruts, notamment ceux à basse teneur en soufre.

### TECHNIQUE ANTERIEURE

Depuis longtemps, l'industrie pétrolière a développé des additifs favorisant la filtrabilité des carburants aux basses températures : ce sont les copolymères d'éthylène et d'acétate de vinyle et/ou de propionate de vinyle (EVA ou EVP), appelés additifs de TLF (Température Limite de Filtrabilité). Ils ont pour rôle de modifier la cristallisation et plus particulièrement le rôle de limiter la taille des cristaux de paraffines formés à basse température, par exemple inférieure à 5°C, en vue de passer les filtres disposés à l'intérieur des moteurs à combustion interne ou dans les installations de chauffage. Ce type d'additifs, connu très largement par l'homme du métier, est très souvent ajouté aux distillats moyens de type classique, et notamment ceux utilisés comme carburants Diesel ou comme combustibles de chauffage. Des quantités supplémentaires de ces additifs peuvent être rajoutées aux carburants vendus en stations service notamment pour satisfaire les spécifications grand froid.

D'autres types d'additifs comme les copolymères d'éthylène, d'acétate de vinyle et d'ester de vinyle ramifié tels que les néodécanoate de vinyle (VeoVA) ayant un rôle sur la TLF ont été décrits, notamment dans US 2004 /0226216.

Pour améliorer la tenue à froid, c'est-à-dire à la fois la TLF et le point d'écoulement des distillats, on peut ajouter à ces additifs de TLF (EVA ou EVP) des additifs ayant la fonction d'agir soit seuls soit en combinaison avec ces additifs sur le point découlement des distillats. L'art antérieur décrit abondamment de telles combinaisons d'additifs améliorant à la fois la température limite de filtrabilité et le point d'écoulement aux basses températures des distillats hydrocarbonés de type classique.

Ainsi, US 3 275 427 décrit un distillat moyen de coupe de distillation comprise entre 177 et 400°C contenant un additif constitué de 90 à 10 % en poids d'un copolymère d'éthylène comprenant de 10 à 30% en poids de motifs acétate de vinyle de poids moléculaire compris entre 1000 et 3000 et de 10 à 90 % en poids d'un polyacrylate de lauryle et/ou de polyméthacrylate de lauryle de masse moléculaire en poids variant de 760 à 100 000. Il est noté que ces polyacrylates améliorent la température de filtrabilité déterminée selon la norme NF EN 116 sans détériorer la température de point d'écoulement déterminée par la norme NF 60105.

Pour le transport des pétroles bruts et distillats lourds par pipe, les auteurs du brevet US 3 726 653 ont été confrontés au problème de l'amélioration de l'écoulement notamment aux basses températures auxquelles ces produits pouvaient se figer dans les pipes. Pour améliorer ces propriétés dans des compositions hydrocarbonées contenant des paraffines dont 5 à 20% en poids ont un point d'ébullition supérieur à 350°C et un point de ramollissement supérieur à 35°C, les auteurs du brevet proposent d'ajouter à ces compositions de 10 ppm à 2% en poids d'un mélange de polymère d'un ester oléfinique d'acides carboxyliques de 3 à 5 atomes de carbone avec un alcool de 14 à 30 atomes de carbone et de masse moléculaire en poids variant de 1000 à 1000000, avec un copolymère d'éthylène et d'acétate de vinyle comprenant de 1 à 40, de préférence de 14 à 24 motifs acétate de vinyle de masse moléculaire moyenne de 20000 à 60000. Le rapport molaire polymère d'ester oléfinique sur copolymère d'éthylène et d'acétate de vinyle variant de 0,1 à 10 :1.

Pour contrôler la taille des cristaux de paraffines présentes à des teneurs de moins de 3% dans des distillats moyens ayant un point d'ébullition compris entre 120°C et 480°C, US 4 153 422 propose d'ajouter à ces distillats moyens de 10 ppm à 1 % en poids d'un mélange d'un homopolymère d'un ester oléfinique d'acide acrylique ou méthacrylique comprenant une chaîne alkyle de 14 à 16 atomes de carbone et de masse moléculaire en poids variant de 1000 à 200000, avec un copolymère d'éthylène et d'acétate de vinyle de masse moléculaire moyenne en nombre inférieure à 4000. Le rapport molaire homopolymère d'ester oléfinique sur copolymère éthylène et d'acétate de vinyle variant de 0,1 :1 à 20 :1.

Outre les propriétés de tenue à froid, les hydrocarbures liquides, notamment les carburants diesel, les carburants pour aviation et les carburants ou fiouls pour applications domestiques (FOD) doivent posséder des aptitudes à la lubrification pour la protection des pompes, des systèmes d'injection et/ou de toutes les parties en mouvement avec lesquels ces produits entrent en contact, par exemple dans un moteur à combustion interne. Avec la volonté d'utiliser des produits de plus en plus purs et de moins en moins polluants, l'industrie du raffinage du pétrole est amenée à proposer des carburants ou fiouls à teneur en soufre de plus en plus réduite : depuis le 1^{er} janvier 2005 le taux de soufre autorisé dans les carburants dans l'Union Européenne est limité à 50 ppm et il devra être inférieur à 10 ppm à compter du 1^{er} janvier 2009. Or, en perdant les composés soufrés, on observe une perte du pouvoir lubrifiant de ces carburants. Au-dessous d'une certaine teneur en produits soufrés, on constate même l'apparition sensible de phénomènes d'usure voire de rupture de pièces en mouvement au niveau des pompes et/ou des systèmes d'injection.

Il est donc nécessaire de compenser l'effet lubrifiant des composés soufrés par des composés les moins polluants possible et si possible non polluants, mais présentant un pouvoir lubrifiant suffisant pour limiter les risques d'usure.

Pour résoudre ce problème, plusieurs types d'additifs ont déjà été proposés. Ainsi, on a ajouté aux gazoles des additifs anti-usures, connus pour certains dans le domaine des lubrifiants, du type des esters d'acides gras et des acides gras dimères non saturés, des amines aliphatiques, des esters d'acides gras et de diéthanolamine et des acides monocarboxyliques aliphatiques à chaîne longue tels que décrits dans les brevets US 2 527 889, US 4 185 594, US 4 204.481, US 4 208 190, US 4.248.182. La plupart de ces additifs présentent un pouvoir lubrifiant suffisant mais à des concentrations bien trop élevées ce qui est très défavorable économiquement à l'achat. En outre, les additifs contenant des acides dimères, comme ceux contenant des acides trimères, ne peuvent être utilisés dans les carburants alimentant les véhicules dans lesquels le carburant peut être en contact avec l'huile de lubrification, car ces acides forment par réaction chimique des dépôts parfois insolubles dans l'huile, mais surtout incompatibles avec les détergents usuellement utilisés.

US 4 609 376 préconise l'utilisation d'additifs anti-usures obtenus à partir d'esters d'acides mono- et poly-carboxyliques et d'alcools polyhydroxylés dans les carburants contenant des alcools dans leur composition.

US 2 686 713 préconise l'introduction de tallol jusqu'à 60 ppm dans les carburants diesel afin de prévenir la formation de rouille sur les surfaces métalliques en contact avec ces carburants.

Une autre voie choisie est d'introduire des esters d'huiles végétales ou les huiles végétales elles-mêmes dans ces carburants pour améliorer leur pouvoir lubrifiant ou leur onctuosité. Parmi ceux-ci, on trouve les esters dérivés d'huiles de colza, de lin, de soja, de tournesol ou les huiles elles-mêmes (voir EP 635 558 et EP 605 857). Un des inconvénients majeurs de ces esters est leur faible pouvoir lubrifiant à une concentration inférieure à 0,5 % en poids dans les carburants.

Pour améliorer le pouvoir lubrifiant des gazoles, WO 95/33805 préconise l'introduction d'un additif de tenue à froid constitué par des additifs azotés comprenant un à plusieurs groupements N-R₁₃ dans lequel R₁₃ comprend de 12 à 24 atomes de carbone, est linéaire, légèrement ramifié ou alicyclique et aromatique, le groupement azoté pouvant être relié par CO ou CO₂ et former des carboxylates d'amines ou des amides.

US3 667 152 décrit l'utilisation de l'acide de tallol (ou TOFA, abréviation de tall oil fatty acid) comme additif anti-usure.

EP 915 944 décrit des additifs d'onctuosité pour améliorer les propriétés lubrifiantes de carburants diesel à faible teneur en soufre, constitués d'au moins un hydrocarbure aliphatique monocarboxylique en C12-C24, saturé ou non, et au moins un composé hydrocarboné polycyclique choisi dans le groupe constitué par les acides résiniques, leurs dérivés (carboxylates d'amine, esters et nitriles). Ces additifs d'onctuosité peuvent être mis en oeuvre dans des hydrocarbures liquides en présence d'autres additifs, tels que détergents, additifs pro-cétane, désémulsifiants, additifs anti-corrosion, additifs améliorant la tenue à froid, modificateurs d'odeurs, mais aussi des additifs d'onctuosité connus.

WO 94/00536 décrit des compositions améliorant les propriétés basse température des fiouls comprenant
a) des terpolymères éthylène- 2 esters insaturés différents et/ou
b) des mélanges de 2 copolymères différents [éthylène- 1 ester insaturé ou un acrylate] dans lesquels les chaînes alkyles des esters les plus longues sont des chaînes alkyle en C6 à C13.

EP 1116780 décrit des additifs multifonctionnels améliorant les propriétés à froid et de lubrifiance de carburants. Ces additifs comprenent deux composés différents A)5-95 % d'un composé amphiphile soluble dans l'huile et B)5-95 % d'un terpolymère éthylène -ester vinylique en C2-C4- ester de vinyle néocarboxylique (i.e qui contient un C tertiaire) en C8-C15. Les propriétés lubrifiantes sont apportées par le composé amphiphile.

US 5254652 décrit des terpolymères éthylène -acétate de vinyl- ester de vinyle néo alkanoate en C9 ou C10 qui améliorent les propriétés de fluidité à froid des carburants.

Il existe un besoin d'améliorer non seulement la tenue à froid (température de filtrabilité et point d'écoulement) mais aussi le pouvoir lubrifiant des carburants à base d'hydrocarbures liquides, notamment des carburants à faible teneur en soufre ou exempts de soufre.

### RESUME DE L'INVENTION

La présente invention, objet de la présente demande, concerne des copolymères qui peuvent avantageusement être utilisés comme additifs bifonctionnels améliorant à la fois la tenue à froid et le pouvoir lubrifiant des carburants liquides dans lesquels ils sont incorporés.

Ainsi le premier but de l'invention vise l'utilisation de ces copolymères pour l'additivation de bases carburant, de préférence de type distillats pour carburants diesel ou pour fiouls domestiques (FOD).

L'invention se rapporte donc à l'utilisation comme additif bifonctionnel de lubrifiance et de tenue à froid pour des compositions d'hydrocarbures liquides d'au moins un copolymère comprenant :
- des unités dérivées de l'éthylène de formule A - (CH₂-CH₂)ₙ₁- et/ou du propylène de formule A' - ((CH₃)CH₂-CH₂)ₙ₂ avec n1+n2=n allant de 98 à 643, de préférence allant de 124 à 515 ; n1 étant avantageusement égal à n ;
- des unités dérivées d'esters vinyliques de formule B : - (CH₂-CHOOCR₁)ₘ₋ₓ- dans laquelle R₁ représente un groupe alkyle linéaire ou ramifié en C₁-C₁₅, de préférence le méthyle, le propyle, et/ou un groupe alkyle ramifié en C5 à C15, dans lequel la ramification est située en n'importe quel point du radical alkyle, de préférence en position 2 ou 3 de la chaîne alkyle ; de préférence les esters vinyliques sont choisis parmi les comonomères parmi ceux en C5-C15, de préférence choisis parmi le pivalate, l'isopentanoate, l'isohexanoate, l'isononanoate, l'isodécanoate et/ou l'isotridécanoate, et avantageusement l'éthyl-2 hexanoate, les néoalcanoates, notamment le néononanoate, le néodécanoate et/ou le néoundécanoate ; avec m allant de 2 à 105, de préférence allant de 16 à 71 et x allant de 0,2 à 105, de préférence allant de 1,6 à 71 ;
- des unités de formule C : - (CH₂-CHOH)ₓ₁- dans laquelle x1 va de 0 à 0,30x, de préférence x1=0 ;
- des unités de formule D : - (CH₂-CHOOCR₂)ₓ₂- dans laquelle x2 va de 0,70x à x, de préférence x2=x, et R₂ représente un groupe alkyle ou alkényle linéaire ou ramifié, saturé ou insaturé en C₈-C₂₄, préférentiellement de C₁₄C₂₀ ou encore de C₁₄ à C₁₈
avec x = x₁ + x₂

De préférence, le pourcentage en moles des unités A et/ou A' dans le copolymère va de 79 à 99% mole, de préférence 86,7 à 90,7% mole ; le pourcentage en moles des unités B dans le polymère va de 0 à 19% mole, de préférence 4,6 à 12% mole; le % en moles des unités C dans le polymère est proche de 0 à 6,3% en moles et avantageusement égal à 0% en mole ;le pourcentage en moles des unités D dans le polymère est de 0,1 à 21 % en moles, de préférence de 0,1 à 10% en mole, plus préferentiellement encore de 0,93 à 8,6% mole.

De préférence, ledit au moins un copolymère est sous forme d'une solution concentrée dans un distillat hydrocarboné, de préférence à une concentration de plus de 50% en poids, de préférence plus de 70% en poids ou de préférence de plus de 80% en poids, de préférence de 60 à 80% en poids.

Selon un mode de réalisation préféré, la composition d'hydrocarbure liquide est un distillat hydrocarboné comprenant de 0 à 5000 ppm de soufre, et contient de 10 à 5 000 ppm dudit au moins un copolymère, éventuellement en mélange avec d'autres additifs tels que détergents, dispersants, désémulsifiants, anti-mousses, biocides, réodorants, améliorants de cétane, anti-corrosions, modificateurs de friction, améliorants de lubrifiance, de combustion, de point de trouble, de point d'écoulement, agents antisédimentation, agents améliorant la conductivité, additifs de tenue à froid, lubrifiants.

Selon un mode de réalisation préféré, le distillat comprend au moins une coupe hydrocarbonée issue du groupe constitué par les distillats de température d'ébullition comprise entre 150 et 450°C, de température de cristallisation commençante Tcc supérieure ou égale à -20°C, de préférence supérieure ou égale à -15°C, de préférence comprise entre -15°C et +10°C, comprenant les distillats de distillation directe, les distillats sous vide, les distillats hydrotraités, les distillats issus du craquage catalytique et/ou de l'hydrocraquage de distillats sous vide, les distillats résultant de procédés de conversion type ARDS et/ou de viscoréduction, les distillats issus de la valorisation des coupes Fischer Tropsch, les distillats résultant de la conversion BTL de la biomasse végétale et/ou animale, prise seule ou en combinaison, et les esters d'huiles végétales et animales ou leurs mélanges.

De préférence, le distillat comprend une teneur en n-paraffines de C9 à C40 comprise entre 1 et 40% en masse.

De préférence, ledit copolymère pour l'additivation de distillat pour carburant Diesel comprend de 0 à 500 ppm de soufre.

De préférence, ledit copolymère pour l'additivation de distillat pour fioul de chauffage comprend de 0 à 5000 ppm de soufre.

Selon un mode de réalisation préféré, ledit copolymère est destiné à l'additivation de distillat pour fioul lourd.

Les bases carburants sont en général riches en paraffines, faiblement aromatiques et ont par conséquent un faible pouvoir solvant. L'additivation des copolymères selon la présente invention s'applique donc non seulement aux distillats issus de la distillation directe des hydrocarbures issus de pétroles bruts très chargés en paraffines mais aussi aux hydrocarbures issus des coupes les plus lourdes des opérations de raffinage c'est-à-dire des procédés de craquage, hydrocraquage et craquage catalytique et des procédés de viscoréduction ou encore les distillats synthétiques issus de la transformation du gaz et/ou du charbon tels que ceux issus du procédé Fischer Tropsch, mais aussi ceux résultant du traitement de la biomasse végétale et/ou animale, comme notamment le NexBTL et les distillats contenant des esters d'huiles végétales et/ou animales, pris seuls ou en mélange.

La présente invention concerne des copolymères comprenant :
a) des unités dérivées de l'éthylène de formule A - (CH₂-CH₂)ₙ₁- et/ou du propylène de formule A' - ((CH₃)CH₂-CH₂)ₙ₂ avec n1+n2=n allant de 98 à 643, de préférence allant de 124 à 515 ; n1 étant avantageusement égal à n ;
b) des unités de formule B : - (CH₂-CHOOCR₁)ₘ₋ₓ- dans laquelle R₁ représente un groupe alkyle linéaire ou ramifié en C₁-C₁₅, de préférence le méthyle, l'éthyle, et/ou un groupe alkyle ramifié en C5 à C15, dans lequel la ramification est située en n'importe quel point du radical alkyle, de préférence en position 2 ou 3 de la chaîne alkyle ; parmi les comonomères vinyliques préférés en C5-C15, on peut citer le pivalate, l'isopentanoate, l'isohexanoate, l'isononanoate, l'isodécanoate et/ou l'isotridécanoate, et avantageusement l'éthyl-2 hexanoate, les néoalcanoates, notamment le néononanoate, le néodécanoate et/ou le néoundécanoate ; avec m allant de 2 à 105, de préférence allant de 16 à 71 et x allant de 0,2 à 105, de préférence allant de 1,6 à 71 ;
c) des unités de formule C : - (CH₂-CHOH)ₓ)- dans laquelle x1 va de 0 à 0,30x, de préférence x1=0 ;
d) des unités de formule D : - (CH₂-CHOOCR₂)ₓ₂- dans laquelle x2 va de 0,70x à x, de préférence x2=x, et R₂ représente un groupe alkyle linéaire ou ramifié, saturé ou insaturé en C₈-C₂₄ et préférentiellement de C₁₄-C₂₀ ou encore de C₁₄ à C₁₈;
   avec x = x₁ + x₂

De manière avantageuse, le pourcentage en moles des unités A et/ou A' dans le copolymère peut représenter de 79 à 99% mol, de préférence 86,7 à 90,7% mol ;
le pourcentage en moles des unités B pouvant représenter de 0 à 19% mol, de préférence 4,6 à 12% mol ;
le pourcentage en moles des unités C pouvant représenter de 0 à 6,3% en moles, de préférence le pourcentage en moles des unités C est voisin, voire égale à 0 % en moles ;
le pourcentage en moles des unités D pouvant représenter de 0,1 à 21 % mol, de préférence 0,93 à 8,6% mol.

La présente invention concerne également le procédé de préparation des copolymères selon l'invention tels que définis précédemment ; ce procédé comprend les étapes suivantes de :
1) fourniture d'un copolymère d'éthylène et/ou propylène et d'ester(s) de vinyle de départ comprenant :
   a) des unités dérivées de l'éthylène de formule A - (CH₂-CH₂)ₙ₁- et/ou du propylène de formule A' - ((CH3)CH₂-CH₂)ₙ₂ avec n1+n2=n et
   b) des unités de formule B : - (CH₂-CHOCOR₁)ₘ- dans laquelle R₁ est choisi parmi les groupes alkyles linéaires ou ramifiés en C₁-C₁₅ seuls ou en mélange, et de préférence comprend le groupe méthyle et/ou le groupe éthyle et/ou un groupe alkyle ramifié en C5 à C15, tel que défini précédemment ;
   n et m étant tels que définis précédemment ;
2) réaction d'hydrolyse au moins partielle des esters d'alkyle présents dans les unités B, puis
3) réaction d'estérification au moins partielle, et de préférence totale, de ces sites hydrolysés par au moins un acide gras de formule R2COOH, R2 étant tel que défini précédemment et/ou au moins un dérivé d'acide gras tel qu'anhydride d'acide, halogénure d'acide, de préférence chlorure d'acide ; le taux d'estérification est de préférence supérieur à 50%, avantageusement supérieur à 80%, et de manière particulièrement avantageuse égal à 100%.

Un autre procédé de préparation des copolymères consiste à procéder à une transestérification d'un copolymère tel que défini en 1) avec un alcool de type R2CH₂OH ; un procédé de transestérification est par exemple décrit dans WO 94/00536.

Les copolymères de départ mis en oeuvre à l'étape 1) sont des copolymères statistiques comprenant :
a) des unité dérivées de l'éthylène de formule A - (CH₂-CH₂)ₙ- et/ou du propylène de formule A' - ((CH3)CH₂-CH₂)ₙ₂ avec n1+n2=n
b) des unités de formule B : - (CH₂-CHOCOR₁)ₘ- dans laquelle R₁ est choisi parmi les groupes alkyles linéaires ou ramifiés en C₁-C₁₅
n et m étant tels que défmis précédemment

Les copolymères selon l'invention ont une masse molaire moyenne en nombre *M̅n̅* mesurée par GPC étalonnée standards Polystyrène en général comprise entre 4500 et 20000 g.mol⁻¹.

Le copolymère obtenu à l'issue de l'étape 2) est obtenu par une étape d'hydrolyse partielle ou totale des groupes esters du copolymère d'éthylène et/ou propylène et d'ester(s) de vinyle de départ décrit ci-dessus.

En général, le taux d'hydrolyse peut représenter de 10 à 100 % des sites hydrolysables (unités B). L'hydrolyse peut être directe ou obtenue par transestérification en milieu acide ou basique de préférence par méthanolyse basique ; le taux de conversion des groupes ester(s) de vinyle en groupes alcool(s) vinylique(s) est contrôlé par le volume de solution de soude méthanolique introduit (en cas de transesterification en milieu basique). Ainsi en faisant varier le taux d'hydrolyse de l'étape 2) du procédé, on fait donc varier le nombre d'esters greffés sur le copolymère final.

L'étape d'hydrolyse 2) est suivie d'au moins une estérification des groupes alcools vinyliques formés à l'étape précédente par un ou plusieurs acides gras (étape 3) de préférence transformés en chlorures d'acides, par exemple à l'aide du chlorure d'oxalyle, pour améliorer le rendement de l'estérification.

Au sens de la présente invention, par acide gras on entend un acide carboxylique aliphatique dérivant de, ou contenu dans, les graisses animales et/ou végétales, les huiles ou les cires. Les acides gras naturels possèdent une chaîne carbonée, saturée ou insaturée, linéaire, ramifiée et/ou cyclique de 4 à 28 atomes de carbone (généralement un nombre pair) ; selon l'invention, les acides gras sont choisis parmi les acides ayant une chaîne hydrocarbonée non cyclique en C₈ à C₂₄, seuls ou en mélange, tels que l'acide stéarique, l'acide oléique, l'acide linoléique, l'acide palmitique et/ou l'acide linolénique, et sont avantageusement choisis parmi les acides gras ayant au moins une insaturation.

On ne sortirait pas du cadre de l'invention si l'étape d'estérification était mise en oeuvre à l'aide d'acides gras dérivés de tallol (en anglais tall oil), plus connus sous l'abréviation anglaise TOFA (tall oil fatty acids). Ces TOFA sont en général obtenus par distillation du tallol, sous-produit de fabrication de la pulpe de bois de pin par le procédé sulfate ; ils comprennent majoritairement des acides gras tels que définis ci-dessus ainsi qu'une quantité mineure d'acides résiniques , tels que les acides abiétique, dihydroabiétique, tétrahydroabiétique, déhydroabiétique, néoabiétique, pimarique, lévopimarique, et/ou parastrinique. Les copolymères greffés obtenus peuvent aussi comporter des fonctions ester d'acides résiniques formées à partir des acides résiniques présents dans le mélange d'acides utilisés.

A l'issue de l'étape 3) (estérification du copolymère issu de l'étape 2), on obtient un copolymère greffé partiellement ou de préférence totalement estérifié.

Les copolymères selon l'invention peuvent être avantageusement utilisés tels qu'obtenus à l'issue de l'étape 3) comme additifs pour hydrocarbures liquides, carburants et fiouls.

Les copolymères selon l'invention présentent une bonne solubilité dans les hydrocarbures de type distillats moyens, supérieure à celle des copolymères d'éthylène et/ou propylène et d'ester(s) vinylique(s) de l'art antérieur, tels qu'EVA ou EVP. Cela permet d'améliorer significativement les caractéristiques de filtrabilité des carburants ou combustibles additivés ou les caractéristiques de tendance au colmatage (norme IP 387) des combustibles et carburants additivés. On constate que la solubilité des copolymères selon l'invention est améliorée par rapport à celle des copolymères d'EVA et/ d'EVP quand on mesure des valeurs de FBT (Filter Blocking Tendency) ; en pratique, cette meilleure solubilité des compositions d'hydrocarbures additivé avec les copolymères selon l'invention permet d'éviter le colmatage des filtres (de diamètre en général égal à 1,6 µm)

L'amélioration de solubilité des copolymères selon l'invention permet d'obtenir des hydrocarbures additivés qui conservent leurs caractéristiques de filtrabilité initiale à température ambiante et restent parfaitement filtrables au niveau des systèmes de filtration que l'on peut rencontrer par exemple dans les systèmes d'alimentation de moteur et les installations de chauffage.

De plus, la viscosité plus faible des copolymères par rapport aux EVA et/ou EVP permet d'accéder à des solutions concentrées en copolymère(s) selon l'invention dans les hydrocarbures à teneur réduite en solvant aromatique sans pénaliser la pompabilité et la mise en oeuvre de ces solutions (contraintes de viscosité et de comportement rhéologique dans les systèmes de pompage ou d'injection).

Les copolymères selon l'invention peuvent également être mis en oeuvre sous forme de solution concentrée dans un solvant, en général dans un distillat hydrocarboné, de préférence à une concentration de plus de 50% en poids, de préférence plus de 70 % en poids, ou de manière avantageuse à une concentration supérieure ou égale à 80 % en poids; des solutions concentrées dans un solvant, en général dans un distillat hydrocarboné, qui sont également préférées comprennent de 60 à 80% en poids de copolymère(s) selon l'invention.

Ces copolymères selon l'invention ou de préférence leurs solutions concentrées telles que définies plus haut sont notamment utilisés comme additifs bifonctionnels : à la fois comme additifs de filtrabilité, c'est-à-dire additifs permettant d'abaisser la température limite de filtrabilité (TLF) de compositions à base d'hydrocarbures liquides et comme additifs améliorant le pouvoir lubrifiant ou additifs d'onctuosité de ces compositions à base d'hydrocarbures liquides.

Les compositions d'hydrocarbures liquides sont en général issues d'opérations de raffinage de pétrole, notamment de la distillation directe d'hydrocarbures mais peuvent également provenir de procédés de craquage thermique, d'hydrocraquage et/ou de craquage catalytique et des procédés de viscoréduction. Ce sont de préférence des distillats moyens que l'on peut utiliser comme carburants diesel, fiouls domestiques chauffage (FOD), kérosène, fiouls lourds.

Avec la demande croissante en carburants, notamment diesel, les raffineurs cherchent à introduire des coupes de sources autres que pétrolières qui sont plus difficilement utilisables dans ces carburants car pouvant induire sur ceux-ci des comportements vis-à-vis de la tenue à froid moins bons, en augmentant la température de filtrabilité et la température d'écoulement de ceux-ci. Parmi ces nouvelles sources de distillats, on peut notamment citer :
- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale et/ou animale, comme notamment le NexBTL,
- et les huiles et/ou esters d'huiles végétales ou animales.

Ces nouvelles bases carburants peuvent être utilisées seules ou en mélange avec des distillats moyens pétroliers classiques définis plus haut comme base carburant et/ou base de fioul domestique ; elles comprennent en général de longues chaînes paraffiniques supérieures ou égales à 16 atomes de carbone.

Les compositions d'hydrocarbures liquides selon l'invention comprennent une majeure partie d'hydrocarbures liquides, de préférence de type distillats moyens, de teneur en soufre de préférence inférieure à 5 000 ppm, de préférence inférieure à 500 ppm, et plus préférentiellement inférieur à 50 ppm, et une partie minoritaire comprenant au moins un copolymère selon l'invention.

De préférence, dans les distillats selon l'invention, la partie majeure est constituée par les distillats de température d'ébullition comprise entre 150 et 450°C, de température de cristallisation commençante Tcc supérieure ou égale à -20°C, de préférence supérieure ou égale à -15°C, de préférence comprise entre -15 °C et + 10 °C, et comprend les distillats de distillation directe, les distillats sous vide, les distillats hydrotraités, les distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, prise seule ou en combinaison, et les esters d'huiles végétales et animales ou leurs mélanges.

Selon un mode de réalisation préféré de l'invention, les distillats selon l'invention comprennent une teneur en n-paraffines de C9 à C40 compris entre 1 et 40 % masse.

Selon un autre objet, l'invention se rapporte à un carburant Diesel comprenant de 0 à 500 ppm de soufre et comprenant au moins un distillat selon l'invention.

Selon un autre objet, l'invention se rapporte à un fioul de chauffage comprenant de 0 à 5000 ppm de soufre et comprenant au moins un distillat selon l'invention. Selon un autre objet, l'invention se rapporte à un fioul lourd comprenant au moins un distillat selon l'invention.

Selon un mode de réalisation préféré de l'invention, les compositions d'hydrocarbures comprennent de 10 à 5 000 ppm en poids, de préférence de 10 à 1 000 ppm d'au moins un copolymère selon l'invention.

Outre le ou les additifs bifonctionnels selon l'invention, les compositions d'hydrocarbures peuvent également en contenir un ou plusieurs autres différents, choisis parmi les détergents, les agents anti-corrosion, les dispersants, les désémulsifiants, des agents anti-mousse, des biocides, des réodorants, des additifs procétane, les modificateurs de friction, des agents d'aide à la combustion (promoteurs catalytiques de combustion et de suie), les agents améliorant le point de trouble, des agents antisédimentation, les agents anti-usure et/ou les agents modifiant la conductivité, voire même un ou plusieurs autres additifs améliorant le point d'écoulement, la température limite de filtrabilité, et le pouvoir lubrifiant.

Parmi ces additifs, on peut citer particulièrement :
a) les additifs procétane, notamment (mais non limitativement) choisis parmi les nitrates d'alkyle, de préférence le nitrate de 2-éthyl hexyle, les peroxydes d'aroyle, de préférence le peroxyde de benzyle, et les peroxydes d'alkyle, de préférence le peroxyde de ter-butyle ;
b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP 861 882, EP 663 000, EP 736 590 ;
c) les additifs détergents et/ou anti-corrosion, notamment (mais non limitativement) choisis dans le groupe constitué par les amines, les succinimides, les alkénylsuccinimides, les polyalkylamines, les polyalkyles polyamines et les polyétheramines. Des exemples de tels additifs sont donnés dans EP 938 535 ;
d) additif de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP 680 506, EP 860 494, WO 98/04656, EP 915 944, FR2 772 783, FR 2 772 784 ;
e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans EP 71 513, EP 100 248, FR 2 528 051, FR 2 528 423, EP1 12 195, EP 1 727 58, EP 271 385, EP 291 367 ;
f) les additifs d'anti-sédimentation ou dispersants, notamment (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalique et d'amine grasse à double chaîne ; les résines alkyl phénols. Des exemples de tels additifs sont donnés dans EP 261 959, EP 593 331, EP 674 689, EP 327 423, EP 512 889, EP 832 172, US2005/0223631 ; US 5 998 530 ; WO 93/14178.
g) les additifs polyfonctionnels d'opérabilité à froid choisis dans le groupe constitué par les polymères à base d'oléfine et de nitrate d'alkényle tels que décrits dans EP 573 490.
h) les additifs de tenue à froid tels que les copolymères d'alpha oléfine et d'ester(s) vinylique(s) tel que EVA, EVP les copolymères d'éthylène, d'acétate de vinyle et d'ester de vinyle ramifié tels que les néodécanoate de vinyle (VEOVA) décrits notamment dans US 2004 /0226216 ;
i) les lubrifiants tels que les acides gras, les TOFA, leurs dérivés tels qu'esters, notamment.

Ces autres additifs sont en général ajoutés en quantité allant de 10 à 1000 ppm (chacun).

Les additifs bifonctionnels selon l'invention peuvent être ajoutés dans les compositions d'hydrocarbures au sein de la raffinerie, et/ou être incorporés en aval de la raffinerie, éventuellement en mélange avec d'autres additifs, sous forme de package d'additifs.

### Exemple de préparation des polymères greffés :

A partir d'un même copolymère d'éthylène et d'acétate de vinyle EVA contenant 28 % en poids d'acétate de vinyle (noté EVA 28), soit 11,2 % en moles, de masse molaire moyenne en nombre = 5 000 g.mol⁻¹ mesurée par GPC standards polystyrène, on greffe 4 types de greffons différents (unités D) notés D1 à D4, selon le procédé de préparation conforme à l'invention.

D1 est un TOFA (mélange d'acides dérivés du tallol, contenant de 2 à 3 % en poids d'acides résiniques et un mélange d'acides gras de C8 à C24 mais majoritairement en C18 ; sa concentration en acides gras saturés et/ou insaturés de C14 - C18 peut varier de 80 à 90%). Le copolymère greffé avec D1 peut aussi comporter des fonctions ester d'acide résiniques formées à partir des acides résiniques présents dans le mélange d'acides dérivés du tallol.

D2 à D4 sont des mélanges d'acides gras saturés et insaturés en C14 à C18 dont la composition molaire en acides gras est détaillée dans le tableau 1 ci-dessous.

**Tableau 1.**

| Acide greffé | C₁₄ | C₁₆ | C₁₈ | C₁₈₋₁ | C₁₈₋₂ | C₁₈₋₃ |
|---|---|---|---|---|---|---|
| D1 | - | 0,6 | 1,4 | 30,8 | 41,1 | 10,7 |
| D2 | | | | > 86 | <14 | |
| D3 | 1,8 | 16,6 | 11,6 | 24,6 | 39,3 | 6,1 |
| D4 | 1 | 45 | 5 | 38 | 11 | - |

Les caractéristiques des copolymères greffés (% en moles des unités A à D sont réunies dans le tableau 2.

**Tableau 2.**

| Po ly m èr e | Polymère de départ | Type de greffon | %mol unités A (nl) | %mol unités B (m-x) | %mol unités C (x₁) | %mol unités D (x₂) | %poids unités D |
|---|---|---|---|---|---|---|---|
| 1 | EVA28 | aucun | 88,8 (130) | 11,2 (16) | 0 (0) | 0 (0) | 0 |
| 2 | EVA28 | D1 | 88,8 (130) | 9,07 (13) | 0 (0) | 2,13 (3) | 15 |
| 3 | EVA28 | D1 | 88,8 (130) | 7,95 (11) | 0 (0) | 3,25 (5) | 21,7 |
| 4 | EVA28 | D1 | 88,8 (130) | 6,68 (10) | 0 (0) | 4,52 (6) | 28 |
| 5 | EVA28 | D1 | 88,8 (130) | 5,15 (7) | 0 (0) | 6,05 (9) | 35 |
| 7 | EVA28 | D2 | 88,8 (130) | 7,05 (10) | 0 (0) | 4,15 (6) | 26 |
| 8 | EVA28 | D3 | 88,8 (130) | 7,05 (10) | 0 (0) | 4,15 (6) | 26 |
| 9 | EVA28 | D4 | 88,8 (130) | 4,18 (6) | 0 (0) | 7,02 (10) | 38,5 |

On mesure la température limite de filtrabilité de 5 distillats moyens GOM notés «a » à « e » de type Gazole moteur EN 590 dont les caractéristiques sont réunies dans le tableau 3 ci-dessous additivés avec l'un des copolymères 1 à 9 à des concentrations comprises entre 35 et 700 ppm en poids.

**Tableau 3 - Caractéristiques des gazoles testés**

| | GOM a | GOM b | GOM c | GOM d | GOM e |
|---|---|---|---|---|---|
| Distillation ASTM D86 | | | | | |
| T90-T20 | 112,7 | 100,5 | 112 | 110 | |
| PF-T90 | 18,6 | 17 | 23 | 18 | |
| T95 (°C) | 353,9 | 350 | 356 | 352 | |
| Point de trouble('C) NF EN 23015 | -4 | -9 | -7 | -7 | -6 |
| TLF(°C)EN 116 | -5 | -9 | -6 | -7 | -7 |
| Point d'écoulement (°C) NF T 60105 | -12 | -15 | -9 | -9 | -12 |
| Paraffines (% masse) Chromatographie | 19,27 | 16,1 | 15,64 | 18,73 | |
| TCC (°C) IP 389 | -6 | -12,6 | -9,5 | -12 | |
| Teneur en soufre (ppm) EN ISO 20846 | 39,8 | 9,2 | 48 | 35 | 9 |

On mesure également le FBT (tendance au colmatage) selon la norme IP387 d'une solution contenant 420 ppm de copolymère 1 à 9 (solution préparée à partir d'une solution mère à 4% en masse de copolymère) ainsi que le pouvoir lubrifiant mesuré dans les conditions de l'essai HFRR (High Frequency Reciprocating Rig EN ISO 12156-1 ou tel que décrit dans l'article SAE 932692 par J.W. Hadley de l'Université de Liverpool) avec une concentration en copolymère de 210 ppm et/ou 420 ppm respectivement. Le test consiste à imposer conjointement à une bille d'acier en contact avec un plateau métallique immobile une pression correspondant à un poids de 200 g et un déplacement alternatif de 1 mm à une fréquence de 50 Hz. Le pouvoir lubrifiant est exprimé par la valeur moyenne des diamètres de l'empreinte d'usure de la bille sur le plateau. Un faible diamètre (généralement inférieur à 400µm) traduit un bon pouvoir lubrifiant; à l'inverse, un diamètre d'usure important (supérieur à 400µm) traduit un pouvoir lubrifiant d'autant plus insuffisant que la valeur du diamètre est élevée.

Les résultats sont réunis dans le tableau 4 ci-dessous.

**Tableau 4.**

| Pol ym ère | Di stil lat | TLF (35 ppm) (°C) | TLF (70 ppm) (°C) | TLF (140 ppm) (°C) | TLF (210 ppm) (°C) | TLF (350 ppm) (°C) | TLF (700 ppm) (°C) | FBT à 420 ppm | HFRR WS 1.4 (µm) à 210 ppm | HFRR WS 1.4 (µm) à 420 ppm |
|---|---|---|---|---|---|---|---|---|---|---|
| 1 | a | | -8 | -13 | -15 | | | 4,4 | 556 | |
| 2 | a | | -9 | -16 | -15 | | | 1,69 | 415 | |
| 3 | a | | | | | | | 1,06 | | |
| 4 | a | | -13 | -15 | -14 | | | 1,01 | 407 | |
| 5 | a | | -13 | -16 | -15 | | | 1,07 | 531 | 513 |
| 7 | a | | -12 | -14 | -14 | | | | | |
| 8 | a | | -9 | -10 | -13 | | | | | |
| 9 | a | | -8 | -15 | -12 | | | 1,04 | | |
| | | | | | | | | | | |
| 1 | b | | -10 | -12 | -13 | | | | | |
| 3 | b | | -11 | -13 | -13 | | | | | |
| 4 | b | | -12 | -13 | -20 | | | | | |
| 5 | b | | -12 | -13 | -24 | | | | | |
| | | | | | | | | | | |
| 1 | c | | -10 | -12 | -15 | | | | | |
| 3 | c | | | -15 | -16 | | | | | |
| 4 | c | | -15 | -18 | -17 | | | | | |
| 5 | c | | -16 | -19 | -18 | | | | | |
| | | | | | | | | | | |
| 1 | d | | | | | -15 | -17 | | | |
| 5 | d | | | | | -18 | -21 | | | |
| | | | | | | | | | | |
| 1 | e | -13 | -17 | -19 | | | | | | 549 |
| 3 | e | -14 | -19 | | | | | | | 562 |
| 4 | e | -15 | -18 | | | | | | | 395 |
| 5 | e | -15 | -20 | -20 | | | | | | 570 |

On compare le pouvoir lubrifiant (HFRR WS 1.4) du distillat moyen GOM noté «a » additivé avec des quantités variables allant de 0 à 84 ppm de D1 seul, de copolymère 2, 4 ou 5 seul ou d'un mélange de copolymère 2, 4 ou 5 et de D1.

Les résultats sont réunis dans le tableau 5 ci-dessous.

**Tableau 5**

| N° copolymère | - | 2 | 4 | 5 | - | 2 | - | 4 | - |
|---|---|---|---|---|---|---|---|---|---|
| D1 seul introduit dans le GOM a | 0 | 0 | 0 | 0 | 34 | 34 | 60 | 60 | 84 |
| (ppm en masse) | | | | | | | | | |
| copolymàe 1 dans le GOM a | 0 | 210 | 210 | 210 | 0 | 210 | 0 | 210 | 0 |
| (ppm en masse) | | | | | | | | | |
| HFRR WS 1.4 | 497 | 415 | 407 | 513 | 455 | 465 | 366 | 409 | 349 |
| (µm) | | | | | | | | | |

On compare le pouvoir lubrifiant (WS 1.4) du distillat moyen GOM noté «e », plus « sévère » que GOM noté « a », additivé avec des quantités variables allant de 0 à 200 ppm de D1 seul, ou l'un des copolymères 2 à 5 seul ou d'un mélange d'un copolymère 2 à 5 et de D1. Pour éviter une évolution des échantillons au cours des opérations de stockage et de préparation, les solutions de polymère greffés sont stabilisées avec un antioxydant l'hydroxytoluène butylé ou 2,6-di-tert-butyl-4-méthylphénol (BHT) à une concentration de 0,05% à 0,1% par rapport à D1.

Les résultats sont réunis dans les tableaux 6 et 7 ci-dessous.

**Tableau 6**

| N° copolymère | - | 2 | 3 | - | 4 | 5 | 5 | - |
|---|---|---|---|---|---|---|---|---|
| Quantité totale de D1 libre dans le GOM e | 0 | 63 | 90 | 100 | 118 | 150 | 150 | 200 |
| (ppm en masse) | | | | | | | | |
| D1 seul introduit dans le GOM e | Non | Non | Non | Oui | Non | Non | Oui | Oui |
| Copolymère i dans le GOM e | Non | Oui | Oui | Non | Oui | Oui | Oui | Non |
| HFRR WS 1.4 | 658 | 549 | 562 | 505 | 395 | 465 | 570 | 392 |
| (µm) | | | | | | | | |

**Tableau 7**

| | D1 (ppm) | Total additifs (ppm en masse) | WS1.4 (µm) |
|---|---|---|---|
| GOM e + D1 (comparatif) | 0 | 0 | 658 |
| | 100 | 100 | 505 |
| | 150 | 150 | 423 |
| | 200 | 200 | 392 |
| | 250 | 250 | 368 |
| GOM e + copolymère 4 + D1 | 0 | 0 | 658 |
| | 115 | 330 | 424 |
| | 135 | 350 | 401 |
| | 160 | 375 | 301 |
| | 185 | 400 | 312 |
| | 248 | 450 | 306 |
| | 285 | 500 | 327 |
| GOM e + copolymère 4 | 0 | 0 | 658 |
| | 85 | 300 | 577 |
| | 118 | 420 | 395 |
| | 150 | 532 | 297 |
| | 185 | 656 | 266 |

## Revendications

1. Utilisation comme additif bifonctionnel de lubrifiance et de tenue à froid pour des compositions d'hydrocarbures liquides d'au moins un copolymère comprenant :
a) des unités dérivées de l'éthylène de formule A - (CH₂-CH₂)ₙ₁- et/ou du propylène de formule A' - ((CH₃)CH₂-CH₂)ₙ₂ avec n1+n2=n allant de 98 à 643, de préférence allant de 124 à 515 ; n1 étant avantageusement égal à n ;
b) des unités dérivées d'esters vinyliques de formule B : - (CH₂-CHOOCR₁)ₘ₋ₓ- dans laquelle R₁ représente un groupe alkyle linéaire ou ramifié en C₁-C₁₅, de préférence le méthyle, le propyle, et/ou un groupe alkyle ramifié en C5 à C15, dans lequel la ramification est située en n'importe quel point du radical alkyle, de préférence en position 2 ou 3 de la chaîne alkyle ; de préférence les esters vinyliques sont choisis parmi les comonomères parmi ceux en C5-C15, de préférence choisis parmi le pivalate, l'isopentanoate, l'isohexanoate, l'isononanoate, l'isodécanoate et/ou l'isotridécanoate, et avantageusement l'éthyl-2 hexanoate, les néoalcanoates, notamment le néononanoate, le néodécanoate et/ou le néoundécanoate ; avec m allant de 2 à 105, de préférence allant de 16 à 71 et x allant de 0,2 à 105, de préférence allant de 1,6 à 71 ;
c) des unités de formule C : - (CH₂-CHOH)ₓ₁- dans laquelle x1 va de 0 à 0,30x, de préférence x1=0 ;
d) des unités de formule D : - (CH₂-CHOOCR₂)ₓ₂- dans laquelle x2 va de 0,70x à x, de préférence x2=x, et R₂ représente un groupe alkyle ou alkényle linéaire ou ramifié, en C₈-C₂₄, préférentiellement de C₁₄-C₂₀ ou encore de C₁₄ à C₁₈
avec x = x₁ + x₂

2. Utilisation selon la revendication 1, dans laquelle le pourcentage en moles des unités A et/ou A' dans le copolymère va de 79 à 99% mole, de préférence 86,7 à 90,7% mole ; le pourcentage en moles des unités B dans le polymère va de 0 à 19% mole, de préférence 4,6 à 12% mole; le % en moles des unités C dans le polymère est proche de 0 à 6,3% en moles et avantageusement égal à 0% en mole ; le pourcentage en moles des unités D dans le polymère est de 0,1 à 21 % en moles, de préférence de 0,1 à 10% en mole, plus préférentiellement de préférence 0,93 à 8,6% mole.

3. Utilisation selon l'une des revendications 1 ou 2 dans laquelle ledit au moins un copolymère est sous forme d'une solution concentrée dans un distillat hydrocarboné, de préférence à une concentration de plus de 50% en poids, de préférence plus de 70% en poids ou de préférence de plus de 80% en poids, de préférence de 60 à 80% en poids.

4. Utilisation selon l'une des revendications 1 à 3 dans laquelle la composition d'hydrocarbure liquide est un distillat hydrocarboné conprenant de 0 à 5000 ppm de soufre, et contient de 10 à 5 000 ppm dudit au moins un copolymère, éventuellement en mélange avec d'autres additifs tels que détergents, dispersants, désémulsifiants, anti-mousses, biocide, réodorants, améliorants de cétane, anti-corrosions, modificateurs de friction, améliorants de lubrifiance, de combustion, de point de trouble, de point d'écoulement, agents antisédimentation, agents améliorant la conductivité, additifs de tenue à froid, lubrifiants.

5. Utilisation selon la revendication 4 dans laquelle le distillat comprend au moins une coupe hydrocarbonée issue du groupe constitué par les distillats de température d'ébullition comprise entre 150 et 450°C, de température de cristallisation commençante Tcc supérieure ou égale à -20°C, de préférence supérieure ou égale à -15°C, de préférence comprise entre -15°C et +10°C, comprenant les distillats de distillation directe, les distillats sous vide, les distillats hydrotraités, les distillats issus du craquage catalytique et/ou de l'hydrocraquage de distillats sous vide, les distillats résultant de procédés de conversion type ARDS et/ou de viscoréduction, les distillats issus de la valorisation des coupes Fischer Tropsch, les distillats résultant de la conversion BTL de la biomasse végétale et/ou animale, prise seule ou en combinaison, et les esters d'huiles végétales et animales ou leurs mélanges.

6. Utilisation selon la revendication 5 dans laquelle le distillat comprend une teneur en n-paraffines de C9 à C40 comprise entre 1 et 40% masse.

7. Utilisation selon l'une des revendications 1 à 6 dudit copolymère pour l'additivation de distillat pour carburant Diesel comprenant de 0 à 500 ppm de soufre.

8. Utilisation selon l'une des revendications 1 à 5 dudit copolymère pour l'additivation de distillat pour fioul de chauffage comprenant de 0 à 5000 ppm de soufre.

9. Utilisation selon l'une des revendications 1 à 5 dudit copolymère pour l'additivation de distillat pour fioul lourd.

## Claims

1. Use as bifunctional lubricity and resistance to cold additive for liquid hydrocarbon compositions of at least one copolymer comprising:
a) units derived from ethylene of formula A -(CH₂-CH₂)ₙ₁- and/or propylene of formula A' -((CH₃)CH₂-CH₂)ₙ₂ with n1 + n2 = n ranging from 98 to 643, preferably ranging from 124 to 515; n1 being advantageously equal to n;
b) units derived from vinyl esters of formula B: -(CH₂-CHOOCR₁)ₘ₋ₓ- in which R₁ represents a C₁-C₁₅ linear or branched alkyl group, preferably methyl, propyl, and/or a C₅ to C₁₅ branched alkyl group, in which the branching is situated at any point of the alkyl radical, preferably in position 2 or 3 of the alkyl chain; preferably the vinyl esters are chosen from the comonomers among C₅-C₁₅ comonomers, preferably chosen from the pivalate, isopentanoate, isohexanoate, isononanoate, isodecanoate and/or isotridecanoate, and advantageously 2-ethyl hexanoate, neoalkanoates, in particular neononanoate, neodecanoate and/or neoundecanoate; with m ranging from 2 to 105, preferably ranging from 16 to 71 and x ranging from 0.2 to 105, preferably ranging from 1.6 to 71;
c) units of formula C: -(CH₂-CHOH)ₓ₁- in which x1 ranges from 0 to 0.30x, preferably x1 = 0;
d) units of formula D: -(CH₂-CHOOCR₂)ₓ₂- in which x2 ranges from 0.70x to x, preferably x2 = x, and R₂ represents a C₈-C₂₄ linear or branched, alkyl or alkenyl group, preferably C₁₄-C₂₀ or also C₁₄ to C₁₈
with x = x₁ + x₂

2. Use according to claim 1, in which the percentage in moles of units A and/or A' in the copolymer ranges from 79 to 99% in moles, preferably 86.7 to 90.7% in moles; the percentage in moles of units B in the polymer ranges from 0 to 19% in moles, preferably 4.6 to 12% in moles; the % in moles of units C in the polymer is close to 0 to 6.3% in moles and advantageously equal to 0% in moles; the percentage in moles of units D in the polymer is from 0.1 to 21% in moles, preferably from 0.1 to 10% in moles, more preferably 0.93 to 8.6% in moles.

3. Use according to one of claims 1 or 2 in which said at least one copolymer is in the form of a concentrated solution in a hydrocarbon distillate, preferably at a concentration of more than 50% by weight, preferably more than 70% by weight or preferably more than 80% by weight, preferably from 60 to 80% by weight.

4. Use according to one of claims 1 to 3 in which the liquid hydrocarbon composition is a hydrocarbon distillate comprising from 0 to 5,000 ppm of sulphur, and contains from 10 to 5,000 ppm of said at least one copolymer, optionally in a mixture with other additives such as detergents, dispersants, demulsifiers, anti-foam agents, biocides, reodorants, cetane improvers, anti-corrosion agents, friction modifiers, lubricity, combustion, cloud point, pour point improvers, anti-sedimentation agents, conductivity improvers, resistance to cold additives, lubricants.

5. Use according to claim 4 in which the distillate comprises at least one hydrocarbon cut originating from the group constituted by the distillates with a boiling point comprised between 150 and 450°C, an initial crystallization temperature ICT greater than or equal to -20°C, preferably greater than or equal to -15°C, preferably comprised between -15°C and +10°C, comprising distillates from direct distillation, vacuum distillates, hydrotreated distillates, distillates originating from catalytic cracking and/or from hydrocracking of vacuum distillates, distillates resulting from ARDS type conversion and/or visbreaking processes, distillates originating from the upgrading of Fischer Tropsch cuts, distillates resulting from the BTL conversion of vegetable and/or animal biomass, taken alone or in combination, and esters of vegetable and animal oils or their mixtures.

6. Use according to claim 5 in which the distillate comprises a C9 to C40 n-paraffin content comprised between 1 and 40% by mass.

7. Use according to one of claims 1 to 6 of said copolymer, as a distillate additive for Diesel fuel comprising from 0 to 500 ppm of sulphur.

8. Use according to one of claims 1 to 5 of said copolymer as a distillate additive for heating fuel oil comprising from 0 to 5000 ppm of sulphur.

9. Use according to one of claims 1 to 5 of said copolymer as a distillate additive for heavy fuel oil.

## Patentansprüche

1. Verwendung, als bifunktionelles Additiv mit Schmier-und Kältebeständigkeitswirkung für flüssige Kohlenwasserstoffzusammensetzungen, mindestens eines Copolymers, das Folgendes umfasst:
a) Einheiten mit der Formel A -(CH₂-CH₂)ₙ₁-, die sich von Ethylen ableiten, und/oder mit der Formel A' -((CH₃)CH₂-CH₂)ₙ₂, die sich von Propylen ableiten, mit n1+n2=n im Bereich von 98 bis 643, vorzugsweise von 124 bis 515; wobei n1 vorteilhafterweise gleich n ist;
b) Einheiten, die sich von Vinylestern mit der folgenden Formel B ableiten: -(CH₂-CHOOCR₁)ₘ₋ₓ-, wobei R₁ für eine geradkettige oder verzweigte C₁-C₁₅-Alkylgruppe, vorzugsweise für Methyl, Propyl, und/oder für eine verzweigte C5- bis C15-Alkylgruppe, bei welcher sich die Verzweigung an einer beliebigen Stelle des Alkylrestes, vorzugsweise an Position 2 oder 3 der Alkylkette, befindet, steht; vorzugsweise sind die Vinylester aus den Comonomeren derjenigen mit C5-C15, vorzugsweise aus Pivalat, Isopentanoat, Isohexanoat, Isonoanoat, Isodecanoat, und/oder Isotridecanoat, und vorteilhafterweise aus 2-Ethylhexanoat, den Neoalkanoaten, insbesondere aus Neononanoat, Neodecanoat und/oder Neoundecanoat, ausgewählt; mit m im Bereich von 2 bis 105, vorzugsweise von 16 bis 71, und x im Bereich von 0,2 bis 105, vorzugsweise im Bereich von 1,6 bis 71;
c) Einheiten der Formel C: -(CH₂-CHOH)_{X1}-, wobei x1 im Bereich von 0 bis 0,30x liegt, vorzugsweise x1=0 ist;
d) Einheiten der Formel D: - (CH₂-CHOOCR₂)ₓ₂-, wobei x2 im Bereich von 0,70x bis x liegt, vorzugsweise x2=x ist, und R₂ für eine geradkettige oder verzweigte Alkyl- oder Alkenylgruppe mit C₈-C₂₄, vorzugsweise mit C₁₄-C₂₀ oder auch C₁₄ bis C₁₈ steht.
wobei x = x₁ + x₂ ist.

2. Verwendung nach Anspruch 1, wobei der molare Prozentanteil der Einheiten A und/oder A' im Copolymer im Bereich von 79 bis 99 mol%, vorzugsweise von 86,7 bis 90,7 mol%, liegt; der molare Prozentanteil der Einheiten B im Polymer im Bereich von 0 bis 19 mol%, vorzugsweise von 4,6 bis 12 mol%, liegt; der molare Prozentanteil der Einheiten C im Polymer nahe 0 bis 6,3 mol% liegt und vorteilhafterweise gleich 0 mol% ist; der molare Prozentanteil der Einheiten D im Polymer im Bereich von 0,1 bis 21 mol%, vorzugsweise von 0,1 bis 10 mol%, mit noch größerem Vorzug vorzugsweise 0,93 bis 8,6 mol%, liegt.

3. Verwendung nach einem der Ansprüche 1 oder 2, wobei das mindestens eine Copolymer in Form einer konzentrierten Lösung in einem Kohlenwasserstoffdestillat vorliegt, vorzugszueise in einer Konzentration von mehr als 50 Gewichts%, vorzugsweise von mehr als 70 Gewichts% oder vorzugsweise von mehr als 80 Gewichts%, vorzugsweise von 60 bis 80 Gewichts%.

4. Verwendung nach einem der Ansprüche 1 bis 3, wobei es sich bei der flüssigen Kohlenwasserstoffzusammensetzung um ein Kohlenwasserstoffdestillat handelt, das 0 bis 5.000 ppm an Schwefel umfasst und 10 bis 5.000 ppm des mindestens einen Copolymers enthält, möglicherweise in Mischung mit weiteren Additiven wie etwa Detergenzien, Dispergiermitteln, Emulsionsbrechern, Schaumverhütern, Biozid, Geruchszusatzstoffen, Cetanverbesserern, Korrosionsschutzmitteln, Reibwertverminderern, Stoffen, welche die Schmierwirkung, die Verbrennung, den Trübungspunkt, den Pourpoint verbessern, Antiabsetzmitteln, Leitfähigkeitsverbesserern, Kältebeständigkeitsadditiven, Schmierstoffen.

5. Verwendung nach Anspruch 4, wobei das Destillat mindestens eine Kohlenwasserstofffraktion umfasst, die aus der Gruppe stammt, welche aus den Destillaten mit einer Siedetemperatur im Bereich von 150 bis 450 °C, einer Temperatur der beginnenden Kristallisation Tcc von größer oder gleich -20 °C, vorzugsweise von größer oder gleich -15 °C, vorzugsweise im Bereich von -15 °C bis +10 °C besteht, wobei sie Destillate aus der direkten Destillation, Vakuumdestillate, hydrobehandelte Destillate, Destillate aus katalytischen Crackverfahren und/oder aus Verfahren zum hydrierenden Cracken von Vakuumdestillaten, Destillate, die bei Verfahren zur Entschwefelung von Atmosphärendestillationrückständen und/oder zur Viskositätsminderung entstehen, Destillate, die aus der Verwertung von Fischer-Tropsch-Fraktionen stammen, Destillate, die bei der BTL-Umwandlung von pflanzlicher und/oder tierischer Biomasse entstehen, einzeln oder in Kombination umfasst, sowie Ester pflanzlicher und tierischer Öle oder deren Mischungen.

6. Verwendung nach Anspruch 5, wobei das Destillat einen Gehalt an C9- bis C40-n-Paraffinen aufweist, der im Bereich von 1 bis 40 Gewichts% liegt.

7. Verwendung nach einem der Ansprüche 1 bis 6 des Copolymers als Destillatadditiv für Dieselkraftstoff, der 0 bis 500 ppm an Schwefel umfasst.

8. Verwendung nach einem der Ansprüche 1 bis 5 des Copolymers als Destillatadditiv für Heizöl, das 0 bis 5.000 ppm an Schwefel umfasst.

9. Verwendung nach einem der Ansprüche 1 bis 5 des Copolymers als Destillatadditiv für Schweröl.
